# EUROPEAN PATENT APPLICATION

(11) **EP 4 831 480 A1**
(43) Date of publication of application: **28.10.2026**
(21) Application number: 23962084.2
(22) Date of filing: 22.12.2023
(51) Int. Cl.: F03D 13/20, E04H 12/34, F03D 13/10

(54) **METHOD FOR ASSEMBLING AND AUTOMATICALLY LIFTING A WIND TURBINE TOWER**

(71) Applicant: Nabrawind Technologies, S.L., 31002 Pamplona (Navarra) (ES)
(72) Inventor: IRIARTE ELETA, Javier, 31180 Zizur Mayor (ES); SANZ PASCUAL, Eneko, 31002 Pamplona (ES); AROCENA DE LA RÚA, Ion, 31001 Pamplona (ES); MARTÍ GASTALDO, Juan José, 28017 Madrid (ES); LUQUIN GARCÍA, Iñaki, 31396 Unzue (ES)
(86) International application number: PCT/ES2023/070779
(87) International publication number: WO 2025/133417

(57) **Abstract**

The invention relates to a method for assembling and automatically lifting a wind turbine tower, characterised in that different ferrules (3) composed of wedges (4) are formed in situ using robotised elements (10) that travel along circular guides (9). Welding, inspection and painting elements are simultaneously applied to the inside and outside of the ferrule (3), and work is done at two heights by replicating the circular guides (9) and raising same by means of vertical columns (16). As the ferrules (3) are formed, they arc raised by a triangle (6) that travels between columns (5) of the automatic lifting system. Subsequently, by horizontally welding ferrules (3) together, a tower section (2) is formed. The method is applied to tubular towers and frustoconical towers that are 6-8 m in diameter and at least 200 m high.

## Description

### Field of the Invention

Method for the assembly and in-situ self-hoisting of metal towers of great height and large diameter.

### Background

Wind turbines are increasing in power and size. Towers supporting them, exceeding 120 m in height, present problems in logistics, assembly, and dynamic coupling with other wind turbine components. The materials currently used for manufacturing such towers are metal and concrete. The best product and the least expensive in ex-works cost is metal; however, its in-situ assembly requires large cranes, and above 160 m such cranes are either unavailable or very expensive and scarce. Furthermore, the logistics and transportation of current towers are limited to 4.5 m, since tower sections cannot exceed such dimensions in diameter because they cannot pass underneath bridges or through tunnels.

For this reason, above 120 m in height it is common for towers to be made of concrete, since by prefabricating near the wind farm or even manufacturing in situ, diameters larger than the 4.5 m limit can be achieved and the risk of dynamic coupling can be avoided. However, these concrete towers still require large cranes, and the total installed tower cost increases exponentially with height.

In a prior study of the state of the art, the following patents are highlighted:
Document WO2011099915A1 relates to a method for assembling a wind turbine. The tower structure is erected by hoisting the tower by means of lifting devices arranged at the base. Once the tower is hoisted, two plates are joined by means of a vertical weld and subsequently by a horizontal weld bead. The hoisting elements remain inside the tower and the welding elements remain outside.

Document WO2020148065A1 describes a wind turbine tower formed by a series of previously manufactured plates. Said tower is made up of at least two segments connected to one another by a circumferential weld seam such that their longitudinal axes extend substantially collinearly with one another.

Document US2021180568 consists of a method for constructing a steel wind turbine tower with segments formed through the stages of: fabrication by cutting and bending, surface treatment, and joining by longitudinal welding performed from inside the tower by means of a mobile welding machine.

The company Keystone Tower Systems discloses on its website a system for the in-situ installation of wind turbine towers. To this end, it uses a spiral welding system that creates large tower sections which do not require transportation and which are subsequently hoisted and assembled using a crane.

The present applicant has a prior patent application PCTES2023070033 describing the self-hoisting system disclosed herein.

The differences between the existing state of the art and the new assembly method are as follows:
- The system used, which hoists the sections being welded in situ, maintains them suspended during the assembly process.
- Welding and painting, together with their corresponding inspections, are carried out both externally and internally, all such elements being sheltered from weather conditions and removable once the assembly process has been completed.
- The assembly line is vertical, adding rings or shell courses to a tower suspended in the air, with clamps holding the segments in a vertical position, with rails for transporting the segments through the gate of a compartmentalized chamber that is removed to allow passage of said segments, and with a second welding and painting level to increase effectiveness.

The new method effectively addresses transportation and assembly demands associated with the problem of constructing taller towers with larger base diameters and without requiring large cranes for assembly. The solution consists of transporting the tower in segments, joining them in situ by means of a robotic welding process and, simultaneously, hoisting the tower sections by means of a dedicated self-hoisting system.

### Description

An object of the invention is to establish a method of assembly in a vertical position, joining several segments, welding and painting them in order to constitute a shell course which is added and fixed to the lower part of the suspended tower. By means of a self-hoisting system and a triangle structure that moves up and down, new shell courses are added and the tower is assembled.

It is an object of the invention to construct towers in situ while being subject to transportation and assembly limitations. Said towers are assembled on the ground over specific foundations and are erected while suspended in the air. They may have a greater diameter and greater height than current towers.

It is another object of the invention to carry out the entire assembly process from inside the self-hoisting system, adequately isolating the robotic welding, inspection, and painting elements in an automated process acting both inside and outside the shell courses, at two different levels and with holding and guiding elements for the segments. To achieve this, supports and guides are installed on the tower foundation, a self-hoisting system is assembled, and the segments (curved plates) are transported in a vertical position to the assembly location by means of holding elements. The segments slide along the guides until they are joined together and are welded in situ in a vertical position, thereby forming a shell course. The entire welding, inspection, and painting process is carried out inside a sealed compartmentalized chamber. With the aid of the self-hoisting system, the shell courses (previously assembled rings) are progressively raised and horizontally joined to one another so as to form a new tower section. Once completed, the section is hoisted and the process continues with the next section. The tower sections have L-shaped flanges to complete their bolted connection, thereby forming the tower. From all the foregoing, the following advantages are derived:
With this assembly method, any tower diameter can be achieved, whether tubular or frustoconical, for example: diameters between 6 and 8 m for towers 200 m in height. By providing the tower with a larger diameter, the dynamic problems arising from the reduction of the tower's natural frequency and its coincidence with the rotational frequency of the wind turbine rotor are overcome.

Compared with the technology relating to the assembly and erection of concrete towers, the production time is considerably reduced since there is no need to wait for concrete curing nor to carry out prestressing thereof.

Compared with the technology relating to the assembly and erection of metal towers composed of sectors, the number of bolts used and the tightening time thereof are considerably reduced, in addition to eliminating the need for auxiliary cranes during assembly.

### Brief description of the drawings

A brief description will be given below for a series of drawings useful for better understanding the invention and that expressly relate to an embodiment of said invention.
Figure 1a, 1b and 1c shows the transportation limitations of current towers by means of actual trucks and the partitioning of new larger-diameter towers.
Figure 2 shows the elements used in the assembly process: Figure 2a in elevation view and Figure 2b in plan view.
Figure 3 shows the anchoring, on a foundation, of the elements used for transporting the segments.
Figure 4 shows the base template and the different arrangements of the segment supports.
Figure 5 shows the robotic welding, inspection, and painting elements operating at two levels and enclosed within a compartmentalized chamber.
Figure 6 shows the composition of a tower section with several shell courses joined together and a detail of their temporary fixing according to their diameter.

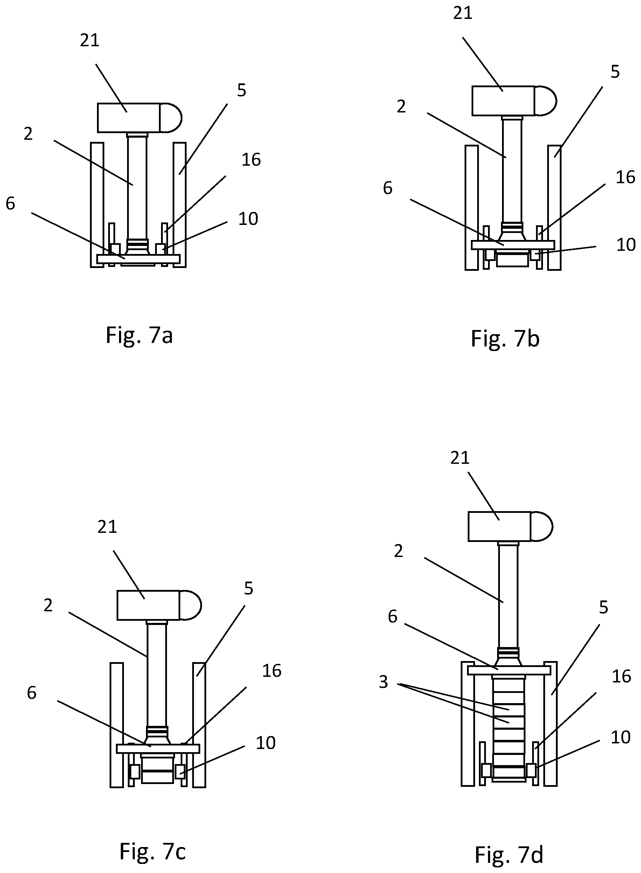

Figure 7 illustrates the practical implementation of assembling a larger-diameter tower section beneath a smaller-diameter tower section and a nacelle.
Figure 8 shows the assembly process of a complete wind turbine by forming and lifting tower sections. The figure shows sections of constant cross-section and localized diameter changes, although the invention is equally applicable to conical towers.

### Detailed Description

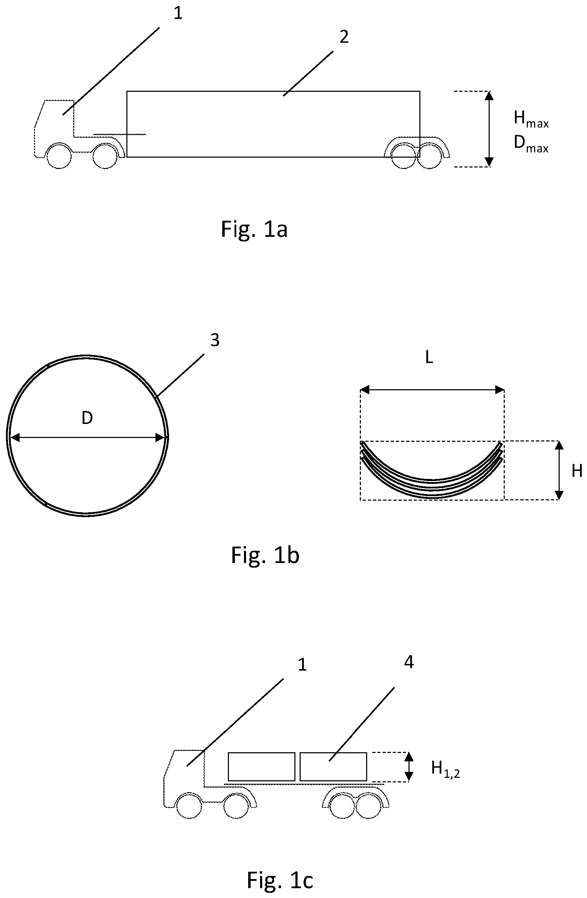

As shown in Figure 1a, the limitation in logistics and transportation by means of trucks (1) of current tower sections (2) lies in the maximum height (Hmax) or maximum diameter (Dmax) of 4.5 m. The tower sections cannot exceed such dimensions because they cannot pass underneath bridges or through tunnels. This limits the diameter of current towers to dimensions compatible with said maximun height. In order to achieve larger diameters, the shell courses (3) forming the tower sections (2) must be split apart, transported, and subsequently joined in situ. According to an exemplary practical embodiment shown in Figures 1b and 1c: a diameter D1 of 6.5 m is made up of three 120° sector segments having a length L1 of 5.7 m and a height H1 of 2.4 m; a diameter D2 of 8 m is made up of three 120° sector segments having a length L2 of 7 m and a height H2 of 3 m. By dividing the tower section (2) into shell courses (3) and the shell courses in turn into segments (4), they can be transported on trucks (1) without exceeding the maximum height or diameter of 4.5 m. Once at the assembly site, the segments (4) are unloaded from the truck (1) and prepared for use.

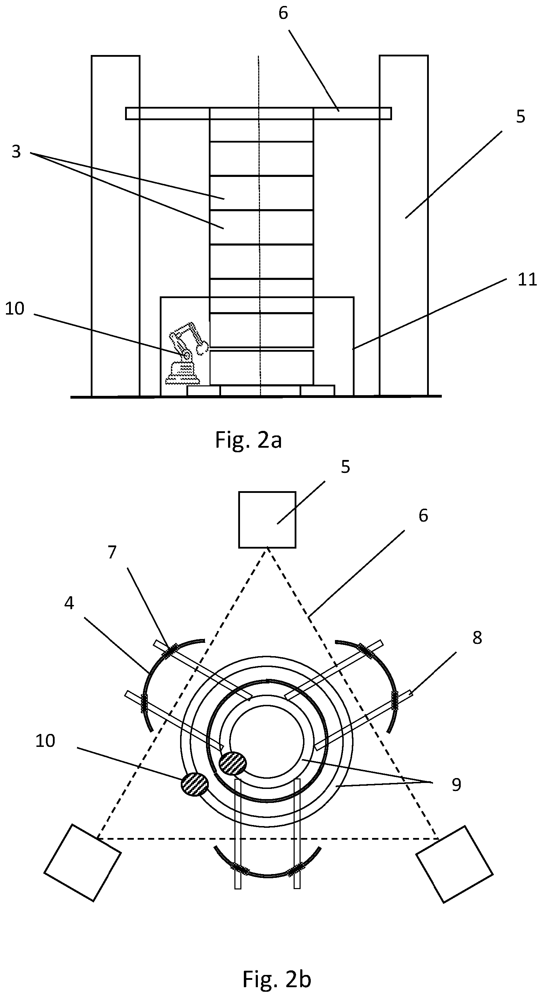

As shown in the elevation and plan views of Figure 2, the self-hoisting equipment comprises three columns (5) connected by an equilateral triangle structure (6) to which either a tower section (2) or the upper shell course (3) of the first tower section is anchored. The triangle structure (6) moves up and down between the columns (5), fastening to the outer flange of the upper shell course and allowing new shell courses (3) to be added from below. The practical embodiment of the self-hoisting system may vary by increasing the number of columns (from three to four) and varying the connecting piece (from a triangle to a square) to which either the tower sections (2) or the shell courses (3) are anchored. In the space existing at the base of the columns (5), the segments (4) are moved in a vertical position, held by clamps (7) and guided along their corresponding transverse guides (8). In the center of the self-hoisting system there are two concentric circular guides (9) along which the robotic welding, painting, and inspection elements (10) move. Said robotic elements (10) are protected from weather conditions by means of a compartmentalized chamber (11) surrounding them while they rotate circularly along their concentric guides (9).

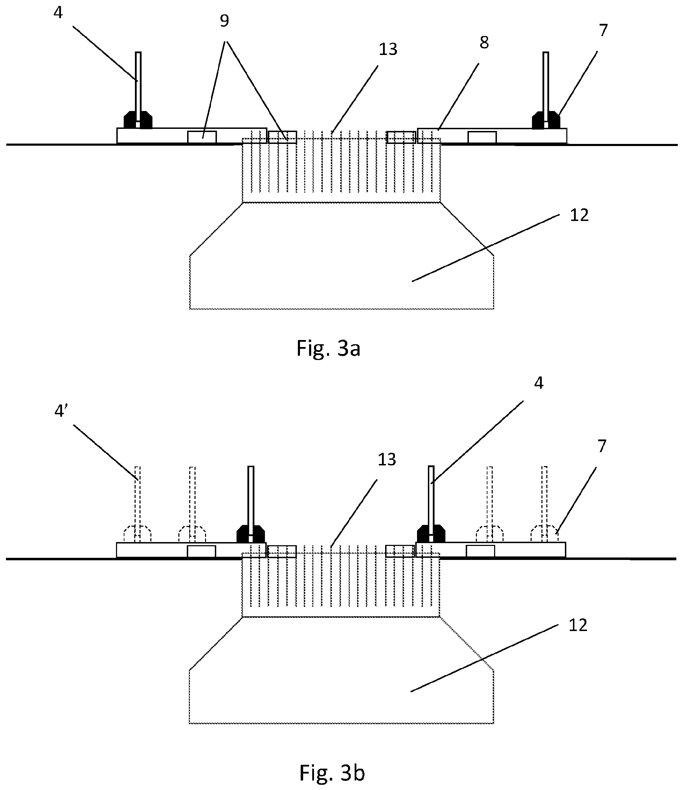

Figures 3a and 3b show a greater level of detail regarding the positioning of the segments (4). The clamps (7) hold the segments (4) vertically. Both the transverse guides (8) and the circular guides (9) are mounted on the tower foundation (12). This attachment provides the required stability for welding operations and allows the process to be expedited by sliding and positioning new segments (4') while the robotic equipment acts on the first segments (4).

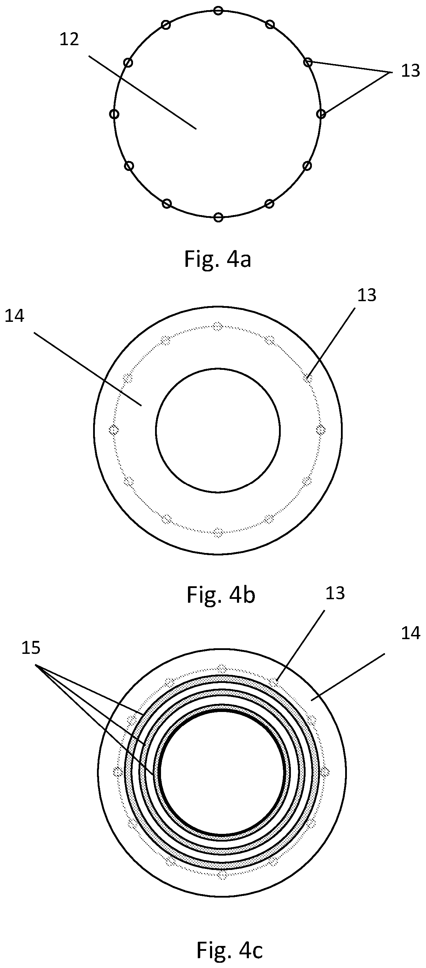

Figure 4a shows the tower foundation (12) and its anchor bolts (13). Around the anchor bolts (13), and fixed thereto, a template (14) is arranged which supports guides (8) and (9) of Figure 3. This template (14) is temporary in nature, ring-shaped, and supports and fixes the segments (4), which may be cylindrical or frustoconical. In order to keep the segments (4) vertical while they are welded together to form the shell courses (3), different supports (15) having different diameters corresponding to the lower diameter of each tower section are used, as shown in Figure 4c.

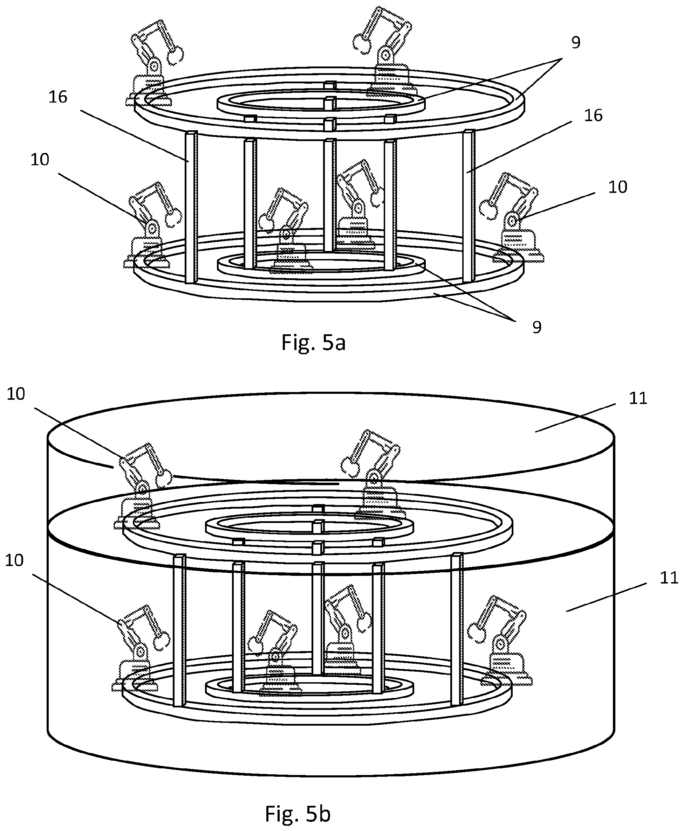

As shown in Figure 5a, the robotic elements (10) may be increased in number and may operate at two different levels. To this end, the circular guides (9) are replicated and raised by means of vertical columns (16) to a sufficient height that allows to position new segments (4). The combination of operation at two levels allows welding to alternate with finishing and painting processes, thereby reducing assembly times. Furthermore, three segments (4) are required to form one shell course (3), such that two robotic elements (10) may operate on each of the circular guides (9): two inside the tower sections and two outside. Figure 5b shows how all the elements are enclosed within a compartmentalized chamber (11) provided with a gate that is removed during the passage of the segments (4) and during the hoisting of the shell courses (3), thereby maintaining the equipment under optimal working conditions.

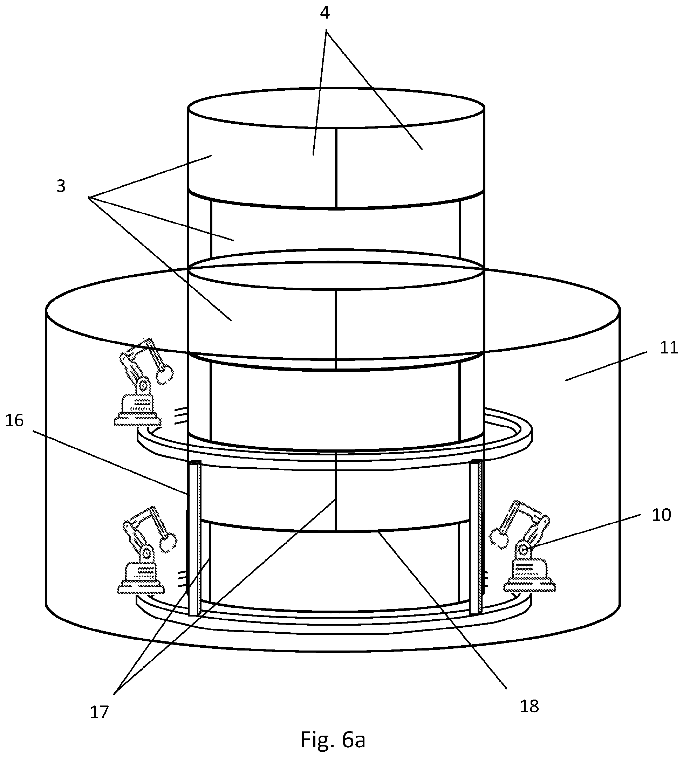

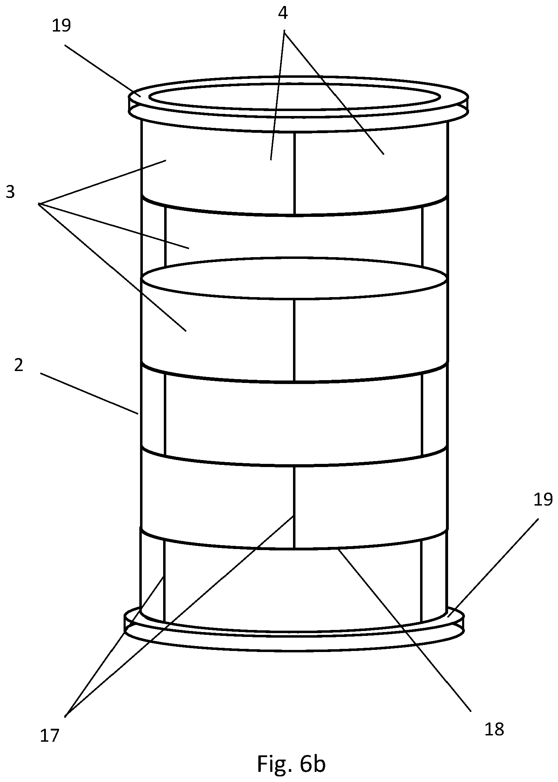

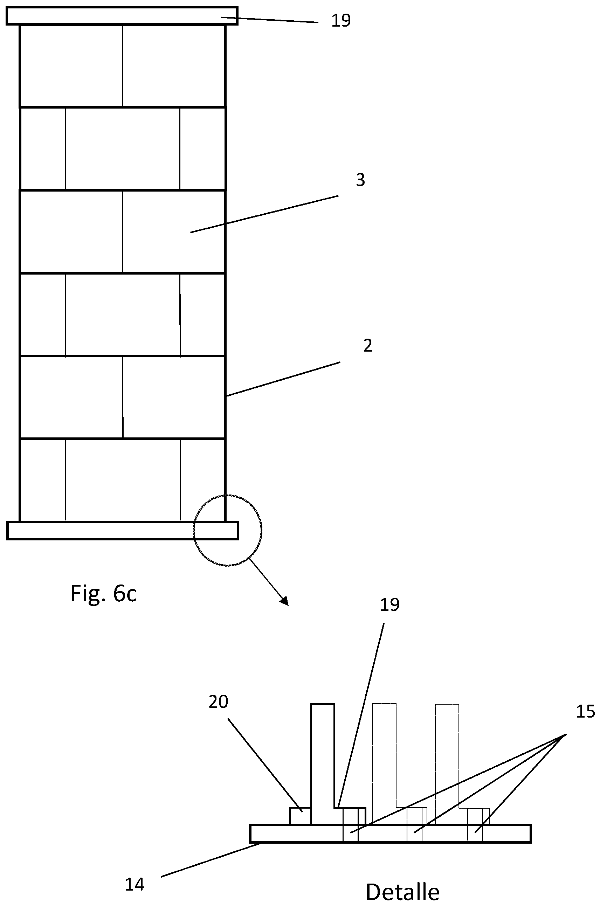

Figure 6a shows a tower section (2) composed of several shell courses (3). In order to optimize the processes, the segments (4) forming one shell course are rotated with respect to the preceding ones such that the vertical weld beads (17) are offset relative to one another. Once a shell course (3) has been formed, it is horizontally welded to the immediately upper shell course, thereby forming a horizontal weld bead (18). The process is repeated by raising the formed shell courses (3) by means of the self-hoisting system until a tower section (2) is completed. The robotic elements (10) are located inside the compartmentalized chamber (11) in order to achieve the sealing required during the welding, inspection, and painting process. Figure 6b clearly shows how the upper shell course and the lower shell course of each tower section (2) are provided with an L-shaped outer flange (19) to which the self-hoisting systems are anchored. As shown in the detail of Figure 6c, the outer flange (19) of the shell course (3) is fixed to the different concentric supports (15) supported on the template (14) of Figure 4. The inner flange (20) constitutes the standard connection for conventional tower shell courses.

The proposed assembly method comprises the following steps:
- Installing a self-hoisting system with its three columns (5) and arranging a nacelle (21) on the triangle structure (6). The process may also begin with a nacelle (21) and a tower section (2). These are elevated by means of the self-hoisting system.
- Mounting on the anchor bolts (13) of the tower foundation (12) the template (14), the different concentric supports (15), the transverse guides (8), and the circular guides (9).
- The transverse guides (8) operate in pairs, and three guides are arranged between the three columns (5), converging toward the two circular guides (9) concentric with the foundation (12) and with the self-hoisting system.
- Vertically moving at least two segments (4), and preferably three, by means of the holding clamps (7), removing the gate of the compartmentalized chamber (11) to allow passage thereof, joining the segments (4) edge-to-edge so as to form a shell course (3) equidistant between the two circular guides (9). The shell course is fixed to the supports (15) using the support corresponding to its diameter.
- Arranging the robotic elements (10) on the circular guides (9) and proceeding with the vertical weld bead (17), finishing, and painting of the shell course (3).
- Raising, with the triangle structure (6), the first shell course by holding it by means of the
outer flange (19), leaving it suspended in the air, and repeating the process with the second shell course (3), welding it to the first shell course by means of a horizontal weld bead (18).
- Repeating the process until a tower section (2) is formed.
- Once a new tower section (2) has been completed, fixing it to the different supports (15) by anchoring it through the outer flange (19) of the lower shell course and releasing the triangle structure (6) in order to lower it and repeat the process.
- Removing the template (14), the concentric supports (15), and the guides (8 and 9) before anchoring the tower to the foundation (12).

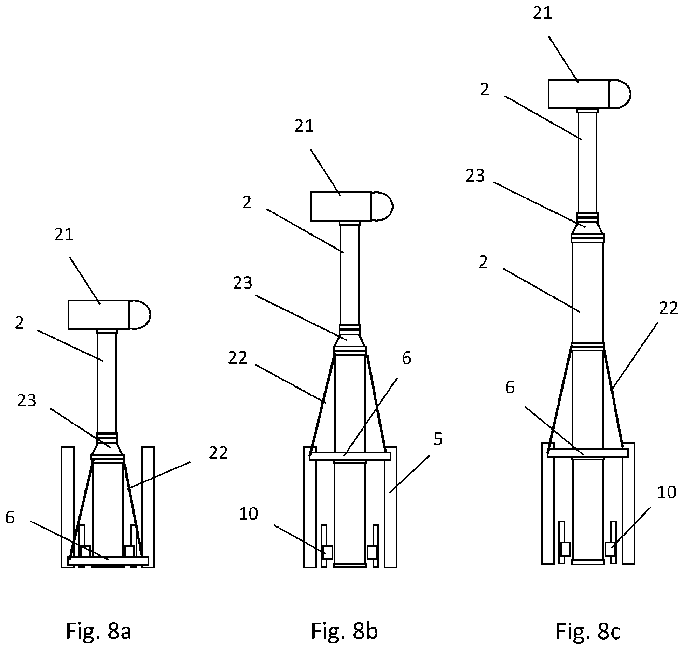

As shown in Figure 8, in this practical embodiment the nacelle (21) and one tower section (2) are previously assembled. The shell courses (3) formed by the described assembly method have a diameter larger than the initial tower section, which has the maximum permitted diameter of 4.5 m. The triangle structure (6) supports the tower section (2) and the nacelle (21) from above and progressively adds, from below, the shell courses (3) formed by robotic welding. Once the new tower section has been completed, it is fixed to the corresponding support (15) depending on its diameter, and the triangle structure (6) is released in order to lower it and repeat the process.

Once more than one tower section (2) has been assembled, extension arms (22) extend from the triangle structure (6) and are fixed to the projecting outer flanges (19) existing on the upper and lower shell courses of each tower section (2), all as shown in Figures 8a, 8b, and 8c. The change in diameter between the first tower section (2), having a diameter of 4.5 m, and the second tower section (2), having a larger diameter according to the structural requirements of the tower, is achieved by means of a transition piece (23) that transitions from a smaller diameter to a larger diameter.

## Claims

1. A method for assembling and self-hoisting a wind turbine tower using a self-hoisting system having at least three columns (5) and a triangle (6), and a foundation (12) with corresponding anchor bolts (13), **characterized by** comprising the steps of:
- installing a compartmentalized chamber (11) inside the self-hoisting system, a nacelle (21) being supported by the triangle structure (6),
- mounting a template (14), concentric supports (15), transverse guides (8), and circular guides (9) on the anchor bolts (13) protruding from the foundation (12), all being arranged between the columns (5) concentrically with the foundation (12),
- vertically displacing at least two segments (4), held by clamps (7), along the transverse guides (8) toward the concentric supports (15),
- removing a gate of the compartmentalized chamber (11) to allow passage of the segments (4), thereby forming a shell course (3) equidistant between the two circular guides (9) and fixed to the supports (15),
- moving robotic elements (10) along the circular guides (9), to carry out a vertical weld bead (17), finishing, and painting of the shell course (3) inside the compartmentalized chamber (11),
- raising the first shell course (3), which is provided with an outer flange (19) for attachment to the triangle structure (6), and bolting said first shell course to the nacelle (21), and repeating the process with a second shell course (3) by welding it to the first shell course by means of a horizontal weld bead (18),
- repeating the process until a tower section (2) is formed, and joining different tower sections (2) together with the aid of extension arms (22) until all tower sections are completed,
- removing the template (14), the concentric supports (15), the transverse guides (8), the circular guides (9), and the compartmentalized chamber, and anchoring the tower, having a diameter larger than the conventional diameter, to the foundation (12).

2. A method for assembling and self-hoisting a wind turbine tower according to claim 1, **characterized by** operating the robotic elements (10) at two levels by replicating the circular guides (9) and raising them by means of vertical columns (16) to a sufficient height allowing incorporation of the different segments (4) from below.

3. A method for assembling and self-hoisting a wind turbine tower according to claim 1, **characterized by** operating two or more robotic elements (10) on each of the circular guides (9), two inside the shell course (3) and two outside the shell course (3), the welding, finishing, and painting operations being separable among the robotic elements.

4. A method for assembling and self-hoisting a wind turbine tower according to claim 1, **characterized by** forming tower diameters greater than 4.5 m, with tubular tower sections and frustoconical tower sections, and by using transition pieces (23) to provide intermediate diameters according to the structural requirements of the tower.

5. A method for assembling and self-hoisting a wind turbine tower according to claim 1, **characterized by** rotating the segments (4) forming a shell course with respect to the preceding ones such that the vertical weld beads (17) are non-coincident, and once a shell course (3) has been formed, horizontally welding it to the immediately upper shell course, thereby forming a horizontal weld bead (18).

6. A method for assembling and self-hoisting a wind turbine tower according to claim 1, **characterized by**, once a new tower section (2) has been completed, fixing the entire assembly to the corresponding support (15) through the outer flange (19), releasing the inner flange (20) from the lower shell course, and lowering the triangle structure (6) and repeating the process.
